# EUROPÄISCHE PATENTSCHRIFT

(11) **EP 2 132 042 B1**
(45) Veröffentlichungstag und Bekanntmachung des Hinweises auf die Patenterteilung: **04.08.2010**
(21) Anmeldenummer: 08716178.2
(22) Anmeldetag: 03.03.2008
(51) Int. Cl.: B41M 5/50, B32B 29/06, D21H 17/44

(54) **VERFAHREN ZUM HERSTELLEN EINES FLÄCHIGEN, BEDRUCKTEN BAUTEILS**
METHOD FOR PRODUCING A FLAT, PRINTED COMPONENT
PROCÉDÉ POUR PRODUIRE UN ÉLÉMENT PLAN IMPRIMÉ

(30) Priorität: 15.03.2007 DE 102007013135
(43) Veröffentlichungstag der Anmeldung: 16.12.2009
(73) Patentinhaber: Hülsta-Werke Hüls GmbH & CO. KG, 48703 Stadtlohn (DE)
(72) Erfinder: TÜNTE, Udo, 46348 Raesfeld (DE); SCHWITTE, Richard, 48172 Gescher (DE); PETERSEN, Frank, 48653 Coesfeld (DE)
(74) Vertreter: Gesthuysen, von Rohr & Eggert
(86) Internationale Anmeldenummer: PCT/EP2008/001656
(87) Internationale Veröffentlichungsnummer: WO 2008/110275

(56) Entgegenhaltungen:
- EP-A- 1 108 529
- EP-A- 1 749 676
- WO-A-2006/130708

## Beschreibung

Die Erfindung betrifft ein Verfahren zum Herstellen eines flächigen, bedruckten oder bedruckbaren Bauteils, insbesondere für Boden-, Wand-, Decken- und/oder Möbelanwendungen, wobei auf einen flächigen Grundkörper des Bauteils eine beharzte, bedruckbare oder bedruckte Papierschicht unter Druck- und Hitzeeinfluß aufgebracht wird, wobei die Papierschicht nicht vollständig durchbeharzt ist und wobei die oberseitige Druckseite der Papierschicht zumindest im wesentlichen harzfrei ist.

Weiterhin betrifft die vorliegende Erfindung eine Papierschicht zur Verwendung bei einem Verfahren der vorgenannten Art.

Außerdem betrifft die vorliegende Erfindung ein bedrucktes oder bedruckbares flächiges Bauteil, insbesondere für Boden-, Wand-, Decken- und/oder Möbelanwendungen, wobei auf den flächigen Grundkörper des Bauteils eine beharzte, bedruckbare oder bedruckte Papierschicht der vorgenannten Art aufgebracht ist.

Ein Verfahren zum Herstellen eines flächigen, bedruckten Bauteils der eingangs genannten Art, eine dafür verwendbare Papierbahn oder -schicht sowie ein bedrucktes flächiges Bauteil der zuvor genannten Art sind aus der EP 1 749 676 A1 bekannt. Die EP 1 749 676 A1 betrifft konkret ein Verfahren und eine Vorrichtung zum Herstellen einer mittels eines Tintenstrahldruckverfahrens bedruckbaren Papierbahn sowie einen mittels dieses Verfahrens bedruckbaren Gegenstand. Bei dem Gegenstand kann es sich um Platten oder Tafeln handeln.

Bei der EP 1 749 676 A1 geht es darum, ein Tintenstrahldruckverfahren zur Verfügung zu stellen, wobei das Druckergebnis auf der Oberfläche der zu bedruckenden Gegenstände hinsichtlich des Aussehens höchsten Qualitätserfordemissen entspricht. Hierzu ist beim Stand der Technik vorgesehen, daß eine längs ihrer gesamten Dicke für flüssiges Kunstharz saugfähige Papierbahn von einer Seite her derart mit flüssigem Kunstharz getränkt wird, daß das Kunstharz die Papierbahn nicht vollständig durchdringt, so daß die andere Seite der Papierbahn zumindest weitgehend frei von Kunstharz ist. Letztlich weist die aus der EP 1 749 676 A1 bekannte Papierbahn einen oberseitigen, im wesentlichen harzfreien Bereich auf, der etwa 50% der Dicke der Papierbahn ausmacht.

Durch das bekannte Verfahren sollen Oberflächen geschaffen werden, die hinsichtlich ihrer für das Bedrucken erforderlichen Eigenschaften konventionellen Papieroberflächen entsprechen, die durch die Auswahl des Papiers und der Färbeflüssigkeit optimal an das angestrebte Druckergebnis angepaßt sein sollen.

Allerdings ist im Zusammenhang mit der aus der EP 1 749 676 A1 bekannten, halb durchbeharzten Papierbahn festgestellt worden, daß es in Abhängigkeit des eingesetzten Papiermaterials und der verwendeten Tinte gerade bei hoher Farbdichte und/oder hohem Wasseranteil dazu kommen kann, daß die mit der Papierbahn in Berührung kommende Tinte im oberen, nicht oder nur geringfügig beharzten Bereich verläuft und sich hierdurch der sogenannte Löschblatteffekt ergibt. Die Folge ist ein relativ unbefriedigendes Druckergebnis.

Aufgabe der vorliegenden Erfindung ist es, hier Abhilfe zu schaffen.

Zur Lösung der zuvor genannten Aufgabe ist bei einem Verfahren der eingangs genannten Art erfindungsgemäß vorgesehen, daß die Papierschicht derart definiert von der Unterseite her beharzt wird, daß der der Druckseite zugewandte obere Papierschichtbereich mit geringem oder ohne Harzanteil sich über maximal 30% der Dicke der Papierschicht erstreckt. Bevorzugt erstreckt sich der obere Papierschichtbereich mit geringem oder ohne Harzanteil über lediglich maximal 20% der Dicke der Papierschicht und weiter bevorzugt über maximal 10% der Dicke der Papierschicht, wobei jeder Einzelwert zwischen 0, 1 % der Dicke der Papierschicht und 30% der Dicke der Papierschicht möglich und ausdrücklich als erfindungswesentlich vorgesehen ist.

Hinzuweisen ist in diesem Zusammenhang darauf, daß sich zwischen dem oberen Papierschichtbereich mit geringem oder ohne Harzanteil und dem unteren Papierschichtbereich mit hohem Harzanteil in der Praxis keine exakte Trennlinie ergibt, da bei einer Beharzung von unten her ein Konzentrationsgefälle des Harzes von unten nach oben besteht derart, daß die höchste Konzentration an der Unterseite vorliegt. Der Übergang des oberen Papierschichtbereichs zum unteren Papierschichtbereich zeichnet sich jedoch durch eine abrupte Änderung des Konzentrationsgefälles aus, während das Konzentrationsgefälle von der Unterseite des unteren Papierschichtbereichs zu dessen Oberseite einerseits und von der Unterseite des oberen Papierschichtbereichs dessen Oberseite im wesentlichen konstant ist oder kontinuierlich abnimmt.

Im übrigen beziehen sich die vorgenannten Werte der Dicke des oberen Papierschichtbereichs auf den noch nicht verpreßten Zustand der Papierschicht, also wenn die Papierschicht noch nicht auf den Grundkörper des Bauteils unter Druck- und Hitzeeinfluß aufgebracht worden ist.

Im Zusammenhang mit der vorliegenden Erfindung ist erkannt worden, daß bei einer Teilbeharzung der Papierschicht über eine Papierdicke von bis zu etwa 60% zwar gerade bei hoher Farbdichte und/oder hohem Wasseranteil ein Verlaufen der Tinte im Papier stattfindet, daß dieser Effekt jedoch überraschenderweise dann nicht mehr auftritt, wenn der obere Papierschichtbereich mit geringem oder ohne Harzanteil gegenüber dem durchbeharzten Papierschichtbereich deutlich kleiner ist. Es ist festgestellt worden, daß dieser positive Effekt dann eintritt, wenn der obere Papierschichtbereich mit geringem oder ohne Harz maximal 30% der Dicke der Papierschicht ausmacht. Der wesentliche und entscheidungserhebliche Unterschied zur aus der EP 1 749 676 A1 bekannten Lehre besteht letztlich darin, daß nunmehr definiert ein oberer Papierschichtbereich mit geringem oder ohne Harzanteil erzeugt wird, der deutlich kleiner ist als der untere durchbeharzte Papierschichtbereich.

Darüber hinaus ergibt sich bei der vorliegenden Erfindung ein weiterer, durchaus beachtlicher Vorteil. Üblicherweise wird auf ein bedrucktes Bauteil, jedenfalls wenn es im Bodenbereich eingesetzt wird, eine obere Schutzschicht, die ebenfalls beharzt ist, unter Druck- und Hitzeeinfluß aufgebracht. Bei dem aus der EP 1 749 676 A1 bekannten Bauteil kommt es nach dem Verpressen der Schutzschicht in der Regel dazu, daß zwischen dem Harz der Schutzschicht und dem Harz der Papierschicht ein im wesentlichen harzfreier Schichtbereich bleibt. Da sich das Harz der Schutzschicht mit dem der Papierschicht nicht oder nicht hinreichend verbindet, kann dies unter bestimmten Bedingungen zum Ablösen der Schutzschicht führen. Im Zusammenhang mit der vorliegenden Erfindung ist erkannt worden, daß eine hinreichende Verbindung des Harzes der Papierschicht mit dem der Schutzschicht jedenfalls dann gewährleistet ist, wenn der obere Papierschichtbereich mit geringen oder ohne Harzanteil sich über maximal 30% der Dicke der Papierschicht erstreckt.

Zur Erzielung einer definierten Harzschichtdicke in der Papierschicht wird die Menge des der Unterseite zugeführten Harzanteils in Abhängigkeit der Porosität und damit der Saugfähigkeit der Papierschicht und der Viskosität des Harzes verfahrenstechnisch definiert gesteuert. Wird die Beharzung beispielsweise über eine Walze, die durch ein Tauchbad läuft, wobei die Papierschicht mit der Unterseite über eine Walze geführt wird, vorgenommen, spielen als weitere Prozeßparameter die Eintauchtiefe der Walze, die Oberflächenbeschaffenheit der Walze, der Durchmesser der Walze, der Anpreßdruck zwischen der Papierschicht und der Walze und die Transportgeschwindigkeit der Papierschicht eine Rolle. Es versteht sich, daß grundsätzlich auch andere Verfahrensmöglichkeiten der Beharzung statt mittels einer Walze bestehen. Beispielsweise kann das Harz über einen Düsenauftrag aufgebracht werden.

Zur Erzielung einer definierten Schichtdicke des oberen Papierschichtbereichs bietet es sich im übrigen an, daß die Papierschicht von der Oberseite her definiert mit einer sich nicht mit dem Harz mischenden Sperrflüssigkeit und/oder die Partikel der Farbaufnahmeschicht aufweisenden Flüssigkeit getränkt wird derart, daß sich eine sich über maximal 30% der Dicke der Papierschicht ergebende Sperrschicht für das Harz bildet. Die Aufbringung der Sperrflüssigkeit und/oder der die Partikel der Farbaufnahmeschicht aufweisenden Flüssigkeit kann in gleicher Weise wie die Aufbringung des Harzes aber auch grundsätzlich in anderer Weise erfolgen. Nach dem Beharzen der Papierschicht wird die Sperrflüssigkeit und/oder die Partikel der Farbaufnahmeschicht aufweisende Flüssigkeit verdampft. Der ursprünglich von der Sperrflüssigkeit und/oder der die Partikel der Farbaufnahmeschicht aufweisenden Flüssigkeit eingenommene Raum bildet dann den oberen Papierschichtbereich.

Bevorzugt ist es in diesem Zusammenhang, daß in der Sperrflüssigkeit und/oder der die Partikel der Farbaufnahmeschicht aufweisenden Flüssigkeit nach dem Verdampfen in dem oberen Papierschichtbereich verbleibende Feststoffe, insbesondere Pigmente und/oder Bindemittel vorgesehen sind. Bei den Pigmenten und/oder Bindemitteln kann es sich um die nachfolgend im Zusammenhang mit der Farbaufnahmeschicht angegebenen Inhaltsstoffe handeln. Derartige Feststoffe unterstützen die Fixierung der Druckfarbe im oberen Papierschichtbereich.

Grundsätzlich ist es möglich, je nach Anwendungsfall oberseitig auf der Papierschicht eine separate Farbaufnahmeschicht vorzusehen, auf die dann die Farbschicht aufgebracht und/oder oberseitig in diese eingebracht wird, oder aber auf eine solche separate Farbaufnahmeschicht gänzlich zu verzichten, so daß das Papier an der Oberseite der Papierschicht unmittelbar bedruckt wird, die Farbschicht sich also unmittelbar auf der Oberseite der Papierschicht befindet. Wird eine Farbaufnahmeschicht realisiert, bietet es sich an, diese als Pigmentstrich auszubilden. Das Flächengewicht der Farbaufnahmeschicht sollte dabei zwischen 0,5 g/m² bis 20 g/m² betragen. Wird ein Pigmentstrich verwendet, sollte dieser Weißpigmente, wie Kaolin, Kalziumcarbonat, Aluminiumhydroxid, Talkum, Titandioxid, oder Farbpigmente, wie Eisenoxidpigmente, Ruß, Kupfer, Aluminium, andere Metallpigmente, oder organische Farbpigmente auf. Der Pigmentstrich kann auch Flüssigfarbstoffe und/oder Kieselsäuren und/oder Kieselsole aufweisen. Desweiteren kann der Pigmentstrich natürliche oder synthetische Bindemittel, wie Stärke, Polyvinylalkohol, Carboxymethylzellulose, Polymerdispersionen auf der Basis von Acrylsäure, Acrylester, Styrol, Butadien, Vinylacetat oder Acrylnitril enthalten. Das Verhältnis von Pigment zu Bindemittel im Pigmentstrich liegt bevorzugt zwischen 1:0,05 bis 1:1 und insbesondere 1:0,08 und 1:0,35, bezogen auf den Feststoffgehalt.

Bei einer bevorzugten Ausführungsform ist die Farbaufnahmeschicht aus einer Farbaufnahmemasse gebildet, die Partikel mit einem durchschnittlichen Durchmesser < 1.000 nm aufweist. Bevorzugt sind durchschnittliche Durchmesser zwischen 50 nm bis 400 nm, insbesondere zwischen 100 nm und 300 nm und bevorzugt zwischen 150 nm und 250 nm vorgesehen. Durch derart kleine Partikel werden die Fasern der Faserstruktur der Papierschicht im oberseitigen Bereich der Faserstruktur bzw. Papierschicht zumindest im wesentlichen ummantelt, wobei an der Oberseite der Papierschicht offene Zwischenräume der ummantelten Faserstruktur verbleiben. Letztlich sind oberseitig der Papierschicht eine Mehrzahl offener Zwischenräume mit einer Länge > 20 µm, vorzugsweise > 30 µm und insbesondere > 40 µm und/oder einer Öffnungsfläche > 200 µm², vorzugsweise > 500 µm² und insbesondere > 750 µm² vorgesehen. Dabei sind auf der Oberseite pro Flächeneinheit [mm²] durchschnittlich wenigstens ein Zwischenraum, vorzugsweise mehr als drei und insbesondere mehr als zehn Zwischenräume vorgesehen. Bei dieser Ausführungsform können die Partikel der Farbaufnahmeschicht/-masse nicht nur aus den oben genannten Stoffen bestehen, sondern insbesondere als Hauptbestandteile Titandioxid, Bariumsulfat und Silikate aufweisen.

Das Auftragen der Farbaufnahmeschicht und insbesondere eines Pigmentstrichs kann grundsätzlich über jegliches Beschichtungsverfahren, insbesondere durch Walzen, Sprühen, Rakeln, Blade-Coating, Luftbürsten, Guß-Strich-Verfahren, Filmpressen, Leimpressen, Vorhanggießverfahren oder Schlitzdüsenauftrag erfolgen.

Die Erfindung bietet im übrigen die Möglichkeit, daß die Papierschicht sowohl vor als auch nach dem Aufbringen auf den Grundkörper bedruckt wird. So ist es zum einen möglich, nach Herstellen des definiert teilbeharzten Papiers dieses zunächst zu bedrucken und das Papier nach dem Bedrucken zu bevorraten, beispielsweise auf Rollen oder auf Bögen. Anschließend kann die bedruckte Papierschicht mit dem Grundkörper des Bauteils unter Druck- und Hitzeeinfluß verpreßt werden, wobei das Harz zunächst aufschmilzt und anschließend unmittelbar aushärtet. Alternativ ist es möglich, die teilbeharzte Papierschicht zunächst auf den Grundkörper in der zuvor beschriebenen Art und Weise aufzubringen und anschließend den Grundkörper mit der bereits aufgebrachten Papierschicht zu bedrucken.

Bevorzugt eignet sich das erfindungsgemäße Verfahren bei der Anwendung in der sogenannten Direktbeschichtung durch das Kurztaktpreßverfahren. Hierbei härtet die teilbeharzte Papierschicht direkt auf der Grundplatte unter Druck und Hitze schmelzend aus. Wesentlich beim Kurztaktpreßverfahren ist zunächst, daß der Grundkörper als Trägerplatte dem Preßdruck, der in der Regel zwischen 200 und 650 N/cm² liegt, nur unwesentlich nachgeben darf. Darüber hinaus dürfen die Grundkörper und die aufzubringenden Papierschichten beim Ein- und Austrag die heißen Preßplatten nicht berühren. Die Temperatur beim Verpressen liegt in der Regel zwischen 80°C und 250°C, bevorzugt zwischen 140°C und 200°C. Die jeweilige Temperatur ist abhängig von der Reaktivierungstemperatur des Harzes. Schließlich ist die sogenannte kritische Liegezeit, das heißt die Zeit vom ersten Kontakt der beharzten Papierschicht mit der Preßplatte bis zum Erreichen des notwendigen Preßdruckes, zu beachten. Diese kritische Liegezeit sollte extrem kurz sein.

Wenngleich es grundsätzlich möglich ist, das erfindungsgemäße Verfahren in Verbindung mit allen bekannten Druckverfahren, insbesondere auch dem Tiefdruckverfahren anzuwenden, erfolgt die Bedruckung der Papierschicht vorzugsweise mittels eines digitalen Druckverfahrens und insbesondere mittels eines Tintenstrahldruckverfahrens. Hierbei kommen dann vorzugsweise sogenannte Inkjet-Digitaldrucker zum Einsatz, mit denen sich hervorragende Druckergebnisse erzielen lassen. Darüber hinaus lassen sich - anders als beim Tiefdruckverfahren - Dekore in einfacher Weise rechnergestützt entwerfen und können kurzfristig gedruckt werden. Im übrigen ist es im Unterschied zum Tiefdruckverfahren auch möglich, daß die Papierschicht erst nach dem Beharzen bedruckt wird.

Zur Bedruckung werden dabei bevorzugt lösemittelhaltige Tinte und/oder wasserhaltige Tinten verwendet. Grundsätzlich können auch UV-basierende Farbsysteme verwendet werden. Diese haben allerdings den Nachteil einer Geruchsentwicklung. Außerdem können sich Probleme beim Verpressen ergeben.

Um ein Verlaufen der Tinte auf der Druckseite der Papierschicht in jedem Falle zu vermeiden, bietet es sich an, die Druckseite der Papierschicht nach der Papierherstellung und auch nach dem Beharzen, jedenfalls aber vor dem Bedrucken zu glätten, zu schleifen und/oder insbesondere fein aufzurauhen. Das Glätten, Schleifen und/oder Aufrauhen kann beispielsweise durch spezielle Rakel oder Kalander erfolgen.

Alternativ oder auch zusätzlich zu der vorgenannten mechanischen Oberflächenbehandlung kann die bereits erwähnte Farbaufnahmeschicht vorgesehen sein, die ein Verlaufen der aufgebrachten Druckfarbe verhindert und im übrigen für eine Vergleichmäßigung der Oberseite der Papierschicht sorgt.

Unabhängig von der Aufbringung der Farbaufnahmeschicht und/oder der Glättung bzw. Aufrauhung der Papierschicht bietet es sich verfahrenstechnisch an, daß die auf die Papierschicht bzw. die Farbaufnahmeschicht aufgebrachte Farbschicht beheizt bzw. getrocknet wird. Hierzu können entsprechende Heizeinrichtungen vorgesehen sein, die die Papierschicht und insbesondere die Oberseite der Papierschicht beheizen. Dies kann beispielsweise über entsprechende Gebläse erfolgen. Statt dessen oder auch zusätzlich können Infrarot-, und insbesondere NIR-Heizeinrichtungen, und/oder Mikrowellenheizeinrichtungen vorgesehen sein, die unmittelbar auf den Wasseranteil in der Farbschicht wirken. Die Beheizung bzw. Trocknung kann vor, während und/oder nach dem Bedrucken erfolgen. Hierzu können ein oder mehrere Heizgeräte vorgesehen sein, wobei die Trocknungsstrecke nicht nur punktuell vorgesehen sein, sondern sich auch über einen größeren Bereich erstrecken kann, beispielsweise zwischen 0 und 5m und insbesondere zwischen 0 bis 2 m. Die Temperatur beim Heizen bzw. Trocknen ist abhängig von der Reaktivierungstemperatur des Harzes und liegt vorzugsweise unterhalb dieser Temperatur. Üblicherweise liegt die Heiztemperatur zwischen 30°C und 150°C. Die vorgenannte Beheizung führt im besten Falle zu einer unmittelbaren Trocknung der Tinte auf der Papierschicht, sobald die Tinte vom Druckkopf abgegeben wird und auf die Papierschicht aufgebracht ist. Hinzuweisen ist vorliegend darauf, daß der Beheizung bzw. Trocknung auch eigenständige erfinderische Bedeutung zukommt, also unabhängig von der definierten Teilbeharzung.

Im Zusammenhang mit der Herstellung der Papierschicht ist darauf hinzuweisen, daß nach der eigentlichen Papierherstellung die Beharzung erfolgt. Die Beharzung kann dabei mit nur einem Harz oder gegebenenfalls in mehreren Beharzungsschritten auch mit unterschiedlichen Harzen erfolgen, um bestimmte Eigenschaften der Papierschicht zu erzielen. Nach dem Beharzen kann ein Trocknen der Papierschicht und anschließend bedarfsweise das Aufbringen der Farbaufnahmeschicht erfolgen. Hieran kann sich erneut ein Trocknen anschließen. Bei einer alternativen Ausführungsform erfolgt eine sogenannte Naß/Naß-Behandlung. Hierbei wird, bevor das Harz vollständig getrocknet ist, sich also noch in einem flüssigen oder gelierten bzw. angelierten Zustand befindet, die Farbaufnahmeschicht aufgebracht. Dies kann gleichzeitig oder hintereinander erfolgen. Anschließend erfolgt eine gemeinsame Trocknung der beharzten und mit der Farbaufnahmeschicht versehenen Papierschicht.

Nach dem Trocknen wird die Papierschicht entweder auf Bögen geschnitten oder aber als durchgehende Bahn aufgerollt. Grundsätzlich ist es beim erfindungsgemäßen Verfahren auch möglich, daß vor dem Schneiden/Aufrollen noch das Bedrucken erfolgt.

Desweiteren bezieht sich die vorliegende Erfindung auf eine Papierschicht bzw. -bahn zur Verwendung bei dem zuvor beschriebenen erfindungsgemäßen Verfahren.

Bei der erfindungsgemäßen Papierschicht selbst handelt es sich um eine solche, die im unverpreßten Zustand einen der Druckseite zugewandten oberen Papierschichtbereich mit geringem oder ohne Harzanteil aufweist, der sich über maximal 30% der Dicke der Papierschicht erstreckt, wobei jeder beliebige Wert zwischen 0,01 % und 30% möglich und erfindungswesentlich ist. Dabei versteht es sich, daß das Material und die Porosität der Papierschicht so gewählt sind, daß eine teilweise Durchdringung der Papierschicht mit Harz und gegebenenfalls der bereits erwähnten Sperrflüssigkeit möglich ist.

Je nach Anwendungszweck sollte das Flächengewicht der Papierschicht ohne Beharzungsanteil zwischen 30 und 300 g/m², vorzugsweise zwischen 50 und 120 g/m² liegen. Das Flächengewicht des Beharzungsanteils sollte vorzugsweise zwischen 5 und 300 g/m² und vorzugsweise zwischen 20 und 100 g/m² liegen.

Bei dem Harz selbst handelt es sich um ein reaktivierbares Harz, insbesondere um ein Aminoplast, wie ein Melamin-Harz. Bevorzugt werden Harze aus der Gruppe der Diallylphtalate, Epoxidharze, Harnstoff-Formaldehyd-Harze, Harnsäure-Acetylsäureester-Copolyester, Melamin-Formaldehyd-Harze, Melamin-Phenol-Formaldehyd-Harze, Phenol-Formaldehyd-Harze, Poly(meth)-acrylate oder ungesättigter Polyester-Harze verwendet.

Die Druckseite der Papierschicht ist vor oder nach der Beharzung vorzugsweise durch eine sich an die Papierherstellung anschließende zusätzliche mechanische Bearbeitung, beispielsweise über Rakel oder Kalander geglättet, geschliffen und/oder fein aufgerauht, um ein unbeabsichtigtes Verlaufen der Druckfarbe zu verhindern.

Wie zuvor ausgeführt worden ist, kann die erfindungsgemäße Papierschicht grundsätzlich eine Farbaufnahmeschicht aufweisen. Allerdings kann auf eine derartige Farbaufnahmeschicht - je nach Anwendungsfall - auch verzichtet werden.

Desweiteren betrifft die vorliegende Erfindung ein bedrucktes oder zu bedruckendes flächiges Bauteil, insbesondere für Boden-, Wand-, Decken- und/oder Möbelanwendungen, mit einer Papierschicht der vorgenannten Art und insbesondere hergestellt nach dem eingangs beschriebenen Verfahren.

Es wird ausdrücklich darauf hingewiesen, daß die vorgenannten und nachstehenden Bereichsangaben und Intervalle sämtliche innerhalb der Bereichsangaben und Intervalle liegende Einzelwerte und Zwischenintervalle bzw. Zwischenbereichsangaben umfassen, ohne daß es einer ausdrücklichen Erwähnung von Einzelwerten bzw. Zwischenintervallen oder Zwischenbereichsangaben bedarf.

Nachfolgend werden Ausführungsbeispiele der Erfindung anhand der Zeichnung näher beschrieben. Dabei zeigt
- Fig. 1: eine schematische Querschnittsansicht einer Papierschicht, die definiert teilbeharzt ist,
- Fig. 2: eine qualitative Darstellung des Konzentrationsverlaufs des Harzanteils über die Schichtdicke der Papierschicht,
- Fig. 3: eine der Fig. 2 entsprechende Darstellung mit weiteren Konzen- trationsverläufen,
- Fig. 4: eine schematische Querschnittsansicht einer teilbeharzten Papier- schicht, die bereits bedruckt ist,
- Fig. 5: eine schematische Querschnittsansicht eines flächigen Bauteils, auf dessen Grundkörper die Papierschicht aufgebracht ist,
- Fig. 6: ein Ablaufschema des erfindungsgemäßen Verfahren und
- Fig. 7: ein alternatives Ablaufschema des erfindungsgemäßen Verfah- rens.

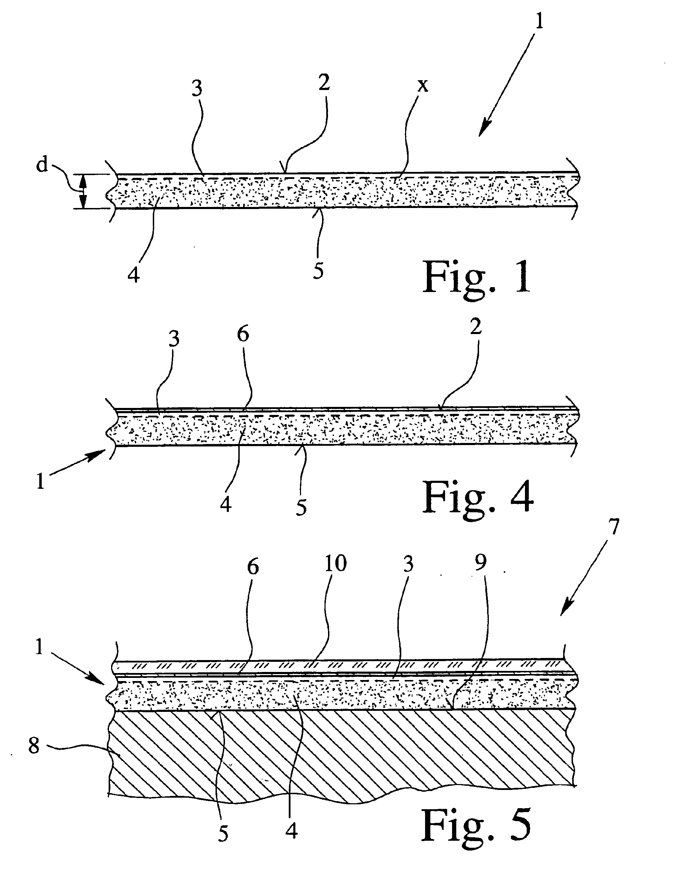

In Fig. 1 ist eine Papierschicht 1 dargestellt. Die Papierschicht 1 besteht aus einem üblichen saug- bzw. flüssigkeitsaufnahmefähigen Papier- bzw. Fasermaterial. Die Papierschicht 1 als solche kann Teil einer Rolle oder eines Bogen sein. In Fig. 1 ist schematisch dargestellt, daß die Papierschicht 1 nur über einen Teil ihrer Dicke d beharzt ist. Hierdurch ergibt sich ein oberer, der Druckseite 2 zugewandter Papierschichtbereich 3 mit geringem oder ohne Harzanteil und ein unterer Papierschichtbereich 4, der von der Unterseite 5 ausgeht und der einen sehr hohen Harzanteil aufweist.

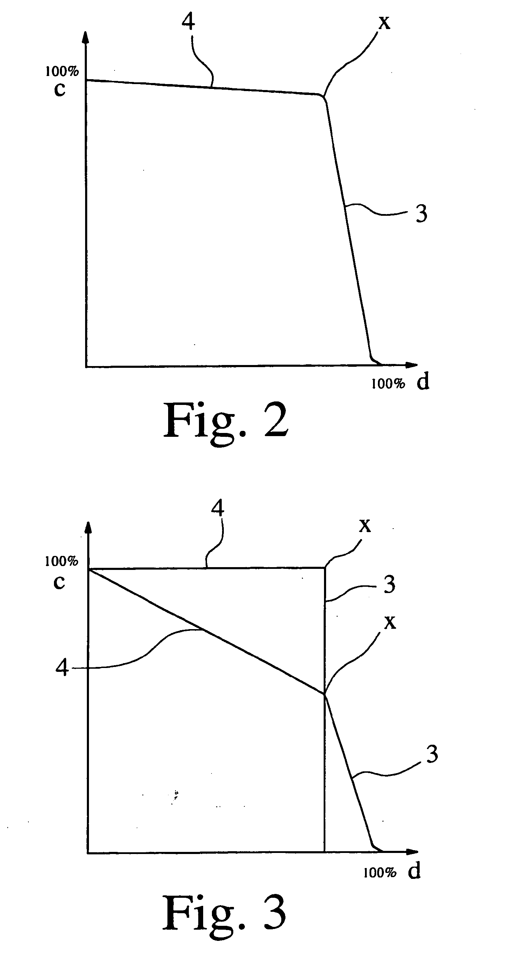

Im in Fig. 1 dargestellten Zustand sind ideale Verhältnisse dargestellt, wobei der obere Papierschichtbereich 3 harzfrei ist, während der untere Papierschichtbereich 4 vollständig durchbeharzt ist. Den Übergang zwischen den beiden Bereichen 3, 4 an der Stelle x verdeutlicht eine gestrichelter Linie. Der in Fig. 1 dargestellte Zustand, das heißt die klare Trennung zwischen den Bereichen 3 und 4 ist derart, daß im oberen Papierschichtbereich 3 kein Harz vorgesehen ist, während der untere Papierschichtbereich 4 vollständig beharzt ist, läßt sich jedoch nur ausgesprochen schwer erreichen. Fig. 2 zeigt einen den tatsächlichen Verhältnissen angenäherten Zustand in einem Diagramm. Dabei ist auf der Y-Achse die Konzentration c in Prozent und auf der X-Achse die Schichtdicke d der Papierschicht 1 ebenfalls in Prozent aufgetragen, wobei die Schichtdicke bei der Unterseite 5 beginnt und an der Druckseite 2 endet. Erkennbar ist, daß im unteren Papierschichtbereich 4 von der Unterseite ausgehend in Richtung zur Druckseite 2 ein Konzentrationsgefälle mit einer relativ geringen Steigung besteht. Grundsätzlich ist es auch möglich, daß der der Unterseite 5 benachbarte Bereich sehr stark durchbeharzt ist und dort überhaupt kein Konzentrationsgefälle besteht, sich das Konzentrationsgefälle also im Bereich 4 erst später ergibt. An der Stelle x, die den Übergang vom unteren Papierschichtbereich 4 zum oberen Papierschichtbereich 3 darstellt, tritt ein Konzentrationsgefälle mit einer sehr viel größeren Steigung auf. Hierbei nimmt die Konzentration sehr viel stärker ab und verringert sich letztlich bis zur Druckseite 2 hin vorliegend bis auf etwa 0%.

In Fig. 3 sind zwei weitere alternative Kurven dargestellt. Die obere Kurve zeigt die ideale Konzentrationsverteilung des Harzes, wobei im unteren Papierschichtbereich 4 die Harzkonzentration konstant 100% beträgt und an der Stelle x, das heißt am Übergang zum oberen Papierschichtbereich 3 schlagartig auf 0% abnimmt. Die untere Kurve zeigt gegenüber der idealen Kurve einen stärken Konzentrationsabfall von der Unterseite 5 bis zum Übergang zum oberen Papierschichtbereich 3, das heißt bis zur Stelle x, wobei das Konzentrationsgefälle anschließend jedoch erheblich stärker abfällt, die Steigung des Konzentrationsabfalls also noch immer wenigstens mehr als doppelt so groß ist wie im unteren Papierschichtbereich 4. Der jeweilige Verlauf des Konzentrationsgefälles hängt von den jeweiligen Einsatzparametern, insbesondere der Porosität bzw. Saugfähigkeit der Papierschicht 1 und der Viskosität des Harzes sowie den Prozeßparametern beim Aufbringen des Harzes auf die Unterseite 5 ab.

Letztlich sind der obere Papierschichtbereich 3 und der untere Papierschichtbereich 4 aber **dadurch gekennzeichnet, daß** der Konzentrationsabfall des Harzanteils im oberen Papierschichtbereich 3 wenigstens um den Faktor 2 größer ist als im unteren Papierschichtbereich 4. Dabei versteht es sich, daß der Konzentrationsabfall sehr viel größer als der Faktor 2 sein kann, wie insbesondere die Idealkurve in Fig. 3 belegt. Letztlich ist jeder einzelne beliebige Wert ab dem Faktor 2 und oberhalb des Faktors 2 möglich.

Wesentlich bei der vorliegenden Erfindung ist nun, daß der obere Papierschichtbereich 3 sich über maximal 30% der Dicke d der Papierschicht 1 erstreckt. In in den Fig. 2 und 3 dargestellten Anwendungsfällen macht der obere Papierschichtbereich 3 etwa 10% bis 20% der Dicke d der Papierschicht 1 aus. In allen Anwendungsfällen ist es so, daß sich an der Druckseite 2 kein oder nur ein sehr geringer Harzanteil befindet. Die optimale Erstreckung des oberen Papierschichtbereichs 3 liegt zwischen 3% bis 20% der Dicke d der Papierschicht 1. Je nach Beschaffenheit des Papiers und der verwendeten Druckfarbe ergibt sich dann ein optimales Druckergebnis, da die Druckfarbe letztlich nur über einen sehr geringen Bereich der Papierschicht 1 aufgenommen werden und nicht verlaufen kann.

In Fig. 4 ist dargestellt, daß auf die Druckseite 2 der Papierschicht 1 eine Farbschicht 6 aufgebracht ist. Die Farbschicht 6 ist unmittelbar auf den oberen Papierschichtbereich 3 aufgebracht, so daß sich ein direkter Kontakt der Farbschicht 6 mit dem Papiermaterial der Papierschicht 1 ergibt.

Die Farbschicht 6 ist vorliegend mittels eines nicht dargestellten Inkjet-Digitaldruckers, also mittels des Tintenstrahldruckverfahrens aufgebracht worden, wenngleich auch andere Druckverfahren, insbesondere der Tiefdruck möglich sind. Dabei können sowohl lösemittelhaltige als auch wasserhaltige Tinten als Druckfarben eingesetzt werden.

In Fig. 5 ist ausschnittweise ein bedrucktes flächiges Bauteil 7 dargestellt. Bei dem Bauteil 7 kann es sich insbesondere um eine Platte oder ein Paneel handeln. Bevorzugt handelt es sich um Boden-, Wand- und/oder Deckenbelagselemente oder aber um plattenförmige Möbelelemente. Das Bauteil 7 weist einen nur ausschnittweise dargestellten flächigen Grundkörper 8 auf, der ein- oder mehrlagig aufgebaut sein kann und insbesondere aus Holz- und/oder Kunststoffwerkstoffen besteht. Insbesondere kann es sich bei dem Bauteil 7 um Holzwerkstoffplatten, wie MDF-, HDF- oder DKS-Platten oder um sogenannte HPL (High Pressure Laminate)-Platten handeln. Bei dem Bauteil 7 kann es sich aber auch um dickere Folien, Pappe oder Gipskartonplatten handeln.

Bei dem in Fig. 5 dargestellten Bauteil 7 ist auf die Oberseite 9 des Grundkörpers 7 die bedruckte Papierschicht 1 aufgebracht und fest damit verbunden. Desweiteren ist auf die Farbschicht 6 eine Schutzschicht 10 aufgebracht. Die Schutzschicht 10, die ebenfalls beharzt ist, dient zum Schutz der Farbschicht 6 vor UV-Strahlung und insbesondere vor mechanischer Beschädigung. Damit die Farbschicht 6 noch erkennbar ist, ist die Schutzschicht 10 transparent. In die Schutzschicht 10 können sehr harte Partikel, wie Korund, eingelagert sein. Hinzuweisen ist darauf, daß die Schutzschicht 10 in der Regel bei solchen Bauteilen 8 realisiert wird, die im Bodenbereich eingesetzt werden. Grundsätzlich kann auf die Schutzschicht 10 aber auch verzichtet werden. Dies gilt insbesondere bei Wand- und Deckenanwendungen und bei Möbelelementen.

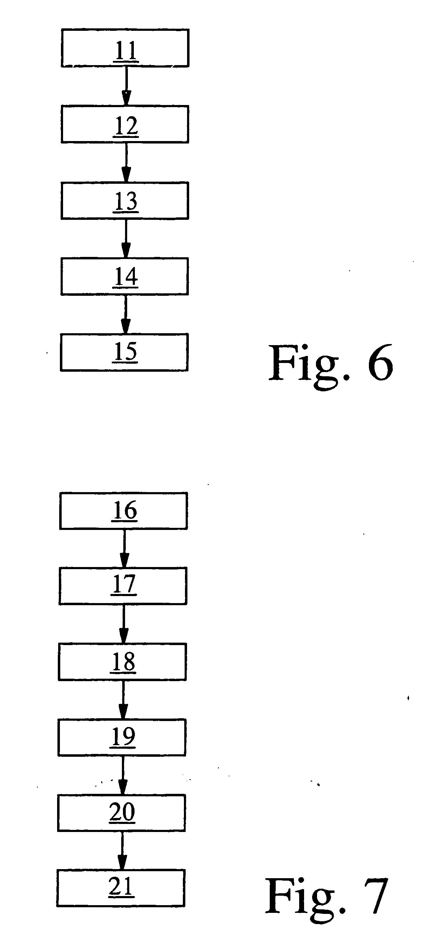

In Fig. 6 ist schematisch das erfindungsgemäße Verfahren bei einem Kurztaktpreßverfahren dargestellt. Das Verfahren beginnt mit der an sich bekannten Herstellung des Papiers in einer Papiermaschine, was im Verfahrensschritt 11 dargestellt ist. Die Papierschicht 1 ist dabei noch Teil einer quasi unendlichen Papierbahn. Nach der Papierherstellung im Verfahrensschritt 11 erfolgt im Verfahrensschritt 12 die definierte Teilbeharzung der Papierschicht 1 von der Unterseite 5 her derart, daß der untere Papierschichtbereich vorliegend etwa 85% der Dicke d der Papierschicht 1 ausmacht, während der obere Papierschichtbereich 3 dann etwa 15% bis 20% der Dicke ausmacht. Grundsätzlich läßt sich die definierte Teilbeharzung im Verfahrensschritt 12 dadurch erzeugen, daß die bahnförmige Papierschicht 1 nach ihrer Herstellung mit ihrer Unterseite 5 über oder an einer drehbaren Walze vorbei geführt wird, die in flüssiges Harz eintaucht. Durch Kontakt der Unterseite 5 der Papierschicht 1 mit der Walze wird Harz von der Papierschicht aufgenommen. Die Menge des auf die Unterseite der Papierschicht 1 aufgebrachten Harzes hängt von verschiedenen Prozeßparametern ab, die bedarfsweise einzustellen sind. Es versteht sich, daß statt der zuvor erwähnten Beharzung mittels einer Walze andere Verfahrensmöglichkeiten der Beharzung bestehen, beispielsweise über einen Düsenauftrag.

Während die zuvor beschriebene Teilbeharzung von der Unterseite 5 her grundsätzlich ausreichend ist, um einen im Vergleich zum unteren Papierschichtbereich 4 relativ schmalen oberen Papierschichtbereich 3 zu erhalten, kann es sich grundsätzlich auch anbieten, daß unmittelbar vor der Teilbeharzung auf die Druckseite 2 der Papierschicht 1 eine Sperrflüssigkeit definiert aufgebracht wird, die in die Papierschicht 1 eindringt und dabei eine Sperrschicht für das Harz bildet. Die Dicke der Sperrschicht entspricht im wesentlichen der Dicke des späteren oberen Papierschichtbereichs 3. Wichtig ist, daß die Sperrflüssigkeit sich nicht mit dem Harz mischt. Nach dem Teilbeharzen wird die Papierschicht 1 dann erwärmt, so daß die Sperrflüssigkeit verdampft. In diesem Zusammenhang kann es sich anbieten, in der Sperrflüssigkeit Feststoffe vorzusehen, die nach dem Verdampfen im oberen Papierschichtbereich 3 verbleiben.

Nach der Teilbeharzung im Verfahrensschritt 12 erfolgt im Verfahrensschritt 13 die Bedruckung und damit der Auftrag der Farbschicht 6. Die Bedruckung erfolgt im Tintenstrahldruckverfahren über Inkjet-Digitaldrucker. Beim Bedrucken kann die Papierschicht 1 noch Teil einer Papierbahn sein oder bereits Teil eines von der Papierbahn abgeschnittenen Bogens. Das Schneiden auf Bögen kann auch an späterer Stelle erfolgen.

Unmittelbar im Anschluß an den Verfahrensschritt 13 oder auch parallel dazu wird der Verfahrensschritt 14, nämlich die Beheizung der Druckseite 2 der Papierschicht 1 und damit die Trocknung der Farbschicht 6 direkt nach dem Aufbringen auf die Papierschicht 1, vorgenommen. Hinzuweisen ist darauf, daß die Papierschicht 1 grundsätzlich auch schon vor dem Bedrucken beheizt bzw. erwärmt worden sein kann, so daß die Farbe beim Bedrucken bereits auf eine vorerwärmte Papierschicht 1 trifft, was die Trocknung unterstützt.

Im Verfahrensschritt 15 wird die Papierschicht 1 mit dem Grundkörper 8 in einer entsprechenden Preßeinrichtung verpreßt. Gleichzeitig wird auch die Schutzschicht 10 verpreßt. Unter dem Druck und der Hitze der Preßplatten der Preßvorrichtung schmilzt das Harz in der Papierschicht 1 und das Harz in der Schutzschicht 10 und härtet während des Preßvorganges unmittelbar aus, so daß sich einerseits eine feste Verbindung der Papierschicht 1 zum Grundkörper 8 und andererseits eine feste Verbindung der Schutzschicht 10 auf der Papierschicht 1 ergibt. Dabei kommt es im übrigen zu einer derart festen Verbindung zwischen der Schutzschicht 10 und der Papierschicht 1, daß ein unbeabsichtigtes Ablösen der Schutzschicht 10 nicht befürchtet werden muß.

In Fig. 7 ist schematisch eine alternative Ausführungsform des erfindungsgemäßen Kurztaktpreßverfahrens der Direktbeschichtung dargestellt. Die Verfahrensschritte 16 und 17 entsprechen dabei den zuvor erwähnten Verfahrensschritten 11 und 12 der Papierherstellung und Teilbeharzung. Hieran schließt sich jedoch der Verfahrensschritt 18 an, wobei die Papierschicht 1, bereits auf Bogen geschnitten, auf den Grundkörper 8, jedoch noch ohne Schutzschicht 18, durch Verpressen in der erwähnten Preßeinrichtung aufgebracht wird.

Nach dem Verpressen der noch unbedruckten Papierschicht 1 auf dem Grundkörper 8 wird das unbedruckte Bauteil 7 nunmehr im Verfahrensschritt 19 ebenfalls im Tintenstrahldruckverfahren bedruckt. Parallel dazu oder unmittelbar anschließend erfolgt die Trocknung der aufgebrachten Farbschicht 6 im Verfahrensschritt 20. Auch hier kann natürlich eine Vorerwärmung der Papierschicht 1 vorgenommen worden sein. Hieran schließt sich die Verpressung der Schutzschicht 10 in der Preßvorrichtung im Verfahrensschritt 21 an, um die Schutzschicht 10 nach Schmelzen und Aushärten des Harzes in der Schutzschicht 10 mit der Papierschicht 1 zu verbinden.

Wenngleich das in Fig. 7 schematisch dargestellte Verfahren verfahrensmäßig aufwendiger ist, hat es den Vorteil, daß nicht bedruckte Bauteile 7 ohne weiteres vorgehalten werden können und die Bedruckung dann je nach Kundenwunsch bedarfsweise kurzfristig erfolgen kann.

### Bezugszeichentiste:

- 1: Papierschicht
- 2: Druckseite
- 3: oberer Papierschichtbereich
- 4: unterer Papierschichtbereich
- 5: Unterseite
- 6: Farbschicht
- 7: Bauteil
- 8: Grundkörper
- 9: Oberseite
- 10: Schutzschicht
- 11: Papierherstellung
- 12: Teilbeharzung
- 13: Bedruckung
- 14: Trocknung
- 15: Verpressung
- 16: Papierherstellung
- 17: Teilbeharzung
- 18: Verpressung
- 19: Bedruckung
- 20: Trocknung
- 21: Verpressung

## Patentansprüche

1. Verfahren zum Herstellen eines flächigen, bedruckten oder bedruckbbaren Bauteils (7), insbesondere für Boden-, Wand-, Decken- und/oder Möbelanwendungen, wobei auf einen flächigen Grundkörper (8) des Bauteils (7) eine behartzte, bedruckbare oder bedruckte Papierschicht (1) unter Druck- und Hitzeeinfluß aufgebracht wird, wobei die Papierschicht (1) nicht vollständig durchbeharzt ist und wobei die oberseitige Druckseite (2) der Papierschicht (1) zumindest im wesentlichen harzfrei ist,
**dadurch gekennzeichnet,**
**daß** die Papierschicht (1) derart definiert von der Unterseite (5) her beharzt wird, daß der der Druckseite (2) zugewandte obere Papierschichtbereich (3) mit geringem oder ohne Harzanteil sich über maximal 30% der Dicke (d) der Papierschicht (1) erstreckt.

2. Verfahren nach Anspruch 1, **dadurch gekennzeichnet, daß** die Papierschicht (1) derart definiert von der Unterseite (5) her beharzt wird, daß der der Druckseite (2) zugewandte obere Papierschichtbereich (3) mit geringem oder ohne Harzanteil sich über maximal 20%, insbesondere maximal 10% der Dikke (d) der Papierschicht (1) erstreckt.

3. Verfahren nach Anspruch 1 oder 2, **dadurch gekennzeichnet, daß** die Papierschicht (1) von der Druckseite (2) her mit einer sich nicht mit dem Harz mischenden Sperrflüssigkeit und/oder einer Partikel der Farbaufnahmeschicht aufweisenden Flüssigkeit derart definiert getränkt wird, daß sich eine sich über maximal 30%, bevorzugt maximal 20% und insbesondere maximal 10% der Dicke (d) der Papierschicht (1) erstreckende Sperrschicht für das Harz bildet.

4. Verfahren nach einem der vorhergehenden Ansprüche, **dadurch gekennzeichnet, daß** die Sperrflüssigkeit und/oder die Partikel der Farbaufnahmeschicht aufweisende Flüssigkeit nach dem Beharzen der Papierschicht (1) verdampft wird.

5. Verfahren nach einem der vorhergehenden Ansprüche, **dadurch gekennzeichnet, daß** die Papierschicht (1) erst nach dem Beharzen bedruckt wird.

6. Verfahren nach einem der vorhergehenden Ansprüche, **dadurch gekennzeichnet, daß** die aufgebrachte Farbschicht (6) während und/oder nach dem Bedrucken getrocknet wird und daß, vorzugsweise, die Trocknung bei einer Temperatur unterhalb der Reaktivierungstemperatur des Harzes, und insbesondere im Bereich zwischen 40°C und 150°C erfolgt.

7. Papierschicht (1) zur Verwendung bei einem Verfahren nach einem der vorhergehenden Ansprüche, wobei die Papierschicht (1) einen oberen Papierschichtbereich (3) mit geringem oder ohne Harzanteil und einen unteren Papierschichtbereich (4) mit einem hohem Harzanteil aufweist und wobei sich der obere Papierschichtbereich (3) über maximal 30%, vorzugsweise maximal 20% und insbesondere maximal 10% der Dicke (d) der Papierschicht (1) erstreckt.

8. Papierschicht nach Anspruch 7, **dadurch gekennzeichnet, daß** im oberen Papierschichtbereich (3) zusätzlich zu den Papiermaterial Feststoffe, insbesondere Pigmente und/oder Bindemittel, die nach der Papierherstellung in die Papierschicht (1) eingebracht worden sind, eingelagert sind.

9. Papierschicht nach Anspruch 7 oder 8, **dadurch gekennzeichnet, daß** die Druckseite (2) der Papierschicht (1) von der Oberseite des oberen Papierschichtbereichs (3) gebildet wird, ohne daß eine separate Farbaufnahmeschicht, wie ein Pigmentstrich, vorgesehen ist oder daß die Druckseite (2) der Papierschicht (1) von der Oberseite einer separaten Farbaufnahmeschicht gebildet wird.

10. Papierschicht nach einem der Ansprüche 7 bis 9, **dadurch gekennzeichnet, daß** zumindest oberseitig in der Faserstruktur der Papierschicht eine Farbaufnahmemasse der Farbaufnahmeschicht vorgesehen ist, die die Fasern der Faserstruktur im oberseitigen Bereich der Faserstruktur zumindest im wesentlichen ummantelt, und daß an der Oberseite der Papierschicht offene Zwischenräume der ummantelten Faserstruktur verbleiben.

11. Papierschicht nach einem der Ansprüche 7 bis 10, **dadurch gekennzeichnet, daß** zumindest oberseitig in der Faserstruktur eine Farbaufnahmemasse der Farbaufnahmeschicht vorgesehen ist und daß die Farbaufnahmemasse Partikel mit einem durchschnittlichen Durchmesser von < 1.000 nm aufweist.

12. Papierschicht nach einem der Ansprüche 7 bis 11, **dadurch gekennzeichnet, daß** an der Oberseite der Papierschicht eine Mehrzahl offener Zwischenräume mit einer Länge > 20 µm, vorzugsweise > 30 µm und insbesondere > 40 µm und/oder einer Öffnungsfläche von > 200 µm², vorzugsweise > 500 µm² und insbesondere > 750 µm² vorgesehen sind.

13. Papierschicht nach einem der Ansprüche 7 bis 12, **dadurch gekennzeichnet, daß** auf der Oberseite pro Flächeneinheit [mm²] durchschnittlich wenigstens ein Zwischenraum, vorzugsweise mehr als drei und insbesondere mehr als zehn Zwischenräume vorgesehen sind.

14. Papierschicht nach einem der Ansprüche 7 bis 13, **dadurch gekennzeichnet, daß** das Flächengewicht der Papierschicht (1) ohne Beharzungsanteil zwischen 30 g/m² und 300 g/m², vorzugsweise zwischen 50 g/m² und 120 g/m² liegt.

15. Bedrucktes oder zu bedruckendes flächiges Bauteil (6), insbesondere für Boden-, Wand-, Decken- und/oder Möbelanwendungen, mit einer Papierschicht (1) nach einem der vorhergehenden Ansprüche und insbesondere hergestellt nach einem Verfahren nach einem der vorhergehenden Ansprüche.

## Claims

1. Method for producing a planar, printed or printable component (7), in particular for floor, wall, ceiling and/or furniture applications, a resin-treated, printable or printed paper layer (1) being applied under the influence of pressure and heat to a planar base body (8) of the component (7), the paper layer (1) not being completely resin-impregnated and the top printed side (2) of the paper layer (1) being at least substantially resin-free, **characterized in that** the paper layer (1) is resin-treated in a defined manner from the bottom (5) in such a way that the upper paper layer region (3) facing the printed side (2) and comprising little or no resin extends over not more than 30% of the thickness (d) of the paper layer (1).

2. Method according to Claim 1 **characterized in that** the paper layer (1) is resin-treated in a defined manner from the bottom (5) in such a way that the upper paper layer region (3) facing the printed side (2) and comprising little or no resin extends over not more than 20%, in particular not more than 10%, of the thickness (d) of the paper layer (1).

3. Method according to Claim 1 or 2, **characterized in that** the paper layer (1) is impregnated in a defined manner from the printed side (2) with a barrier liquid which does not mix with the resin and/or with a liquid comprising particles of the ink acceptance layer, in such a way that a barrier layer for the resin forms, which barrier layer extends over not more than 30%, preferably not more than 20% and in particular not more than 10% of the thickness (d) of the paper layer (1).

4. Method according to any of the preceding claims, **characterized in that** the barrier liquid and/or the liquid having particles of the ink acceptance layer is evaporated after the resin treatment of the paper layer (1).

5. Method according to any of the preceding claims, **characterized in that** the paper layer (1) is printed only after the resin treatment.

6. Method according to any of the preceding claims, **characterized in that** the applied ink layer (6) is dried during and/or after the printing, and **in that**, preferably, the drying is effected at a temperature below the reactivation temperature of the resin and in particular in the range between 40°C and 150°C.

7. Paper layer (1) for use in a method according to any of the preceding claims, the paper layer (1) having an upper paper layer region (3) with little or no resin and a lower paper layer region (4) with a high amount of resin and the upper paper layer region (3) extending over not more than 30%, preferably not more than 20% and in particular not more than 10% of the thickness (d) of the paper layer (1).

8. Paper layer according to Claim 7, **characterized in that** solids, in particular pigments and/or binders, which have been introduced into the paper layer (1) after the papermaking, are incorporated into the upper paper layer region (3) in addition to the paper material.

9. Paper layer according to Claims 7 or 8, **characterized in that** the printed side (2) of the paper layer (1) is formed by the top of the upper paper layer region (3) without a separate ink acceptance layer, such as a pigment coat, being provided or **in that** the printed side (2) of the paper layer (1) is formed by the top of a separate ink acceptance layer.

10. Paper layer according to any of Claims 7 to 9, **characterized in that** an ink acceptance material of the ink acceptance layer, which at least substantially encases the fibres of the fibre structure in the top region of the fibre structure is provided at least on the top in the fibre structure of the paper layer, and **in that** open intermediate spaces of the encased fibre structure remain on the top of the paper layer.

11. Paper layer according to any of Claims 7 to 10, **characterized in that** an ink acceptance material of the ink acceptance layer is provided at least on the top in the fibre structure and **in that** the ink acceptance material comprises particles having an average diameter of < 1000 nm.

12. Paper layer according to any of Claims 7 to 11, **characterized in that** a multiplicity of open intermediate spaces having a length of > 20 µm, preferably > 30 µm and in particular > 90 µm and/or an opening area of > 200 µm², preferably > 500 µm² and in particular > 750 µm² are provided on the top of the paper layer.

13. Paper layer according to any of Claims 7 to 12, **characterized in that** on average at least one intermediate space, preferably more than three and in particular more than ten intermediate spaces, are provided on the top per unit area [mm²].

14. Paper layer according to any of Claims 7 to 13, **characterized in that** the weight per unit area of the paper layer (1) without resin treatment component is between 30 g/m² and 300 g/m², preferably between 50 g/m² and 120 g/m².

15. Component (6) which has been printed on or which is to be printed on, in particular for floor, wall, ceiling and/or furniture applications, comprising a paper layer (1) according to any of the preceding claims and in particular produced by a method according to any of the preceding claims.

## Revendications

1. Procédé de fabrication d'un élément plat (7), imprimé ou imprimable, notamment pour des applications sur des sols, des murs, des plafonds et/ou des meubles, une couche de papier (1) imprégnée de résine, imprimable ou imprimée, étant appliquée sous l'action d'une pression et de chaleur sur un corps de base plat (8) de l'élément (7), la couche de papier (1) n'étant pas complètement imprégnée de résine et le côté d'impression supérieur (2) de la couche de papier (1) étant au moins essentiellement exempt de résine, **caractérisé en ce que**
la couche de papier (1) est imprégnée de résine d'une manière définie à partir du côté inférieur (5), de manière à ce que la zone supérieure de la couche de papier (3), qui fait face au côté d'impression (2) et qui contient une proportion de résine faible ou nulle, s'étende sur un maximum de 30 % de l'épaisseur (d) de la couche de papier (1).

2. Procédé selon la revendication 1, **caractérisé en ce que** la couche de papier (1) est imprégnée de résine d'une manière définie à partir du côté inférieur (5), de manière à ce que la zone supérieure de la couche de papier (3), qui fait face au côté d'impression (2) et qui contient une proportion de résine faible ou nulle, s'étende sur un maximum de 20 %, notamment sur un maximum de 10 %, de l'épaisseur (d) de la couche de papier (1).

3. Procédé selon la revendication 1 ou 2, **caractérisé en ce que** la couche de papier (1) est imprégnée d'une manière définie à partir du côté d'impression (2) avec un liquide d'arrêt non miscible avec la résine et/ou un liquide comportant des particules de la couche réceptrice d'encre, de manière à former une couche d'arrêt pour la résine qui s'étend sur un maximum de 30 %, de préférence sur un maximum de 20 % et notamment sur un maximum de 10 %, de l'épaisseur (d) de la couche de papier (1).

4. Procédé selon l'une quelconque des revendications précédentes, **caractérisé en ce que** le liquide d'arrêt et/ou le liquide comportant des particules de la couche réceptrice d'encre est évaporé après l'imprégnation de résine de la couche de papier (1).

5. Procédé selon l'une quelconque des revendications précédentes, **caractérisé en ce que** la couche de papier (1) n'est imprimée qu'après l'imprégnation de résine.

6. Procédé selon l'une quelconque des revendications précédentes, **caractérisé en ce que** la couche d'encre appliquée (6) est séchée pendant et/ou après l'impression et **en ce que** le séchage a de préférence lieu à une température inférieure à la température de réactivation de la résine, et notamment dans la plage comprise entre 40 °C et 150 °C.

7. Couche de papier (1) destinée à être utilisée dans un procédé selon l'une quelconque des revendications précédentes, la couche de papier (1) comportant une zone supérieure de la couche de papier (3), qui contient une proportion de résine faible ou nulle, et une zone inférieure de la couche de papier (4), qui contient une proportion de résine élevée, et la zone supérieure de la couche de papier (3) s'étendant sur un maximum de 30 %, de préférence sur un maximum de 20 % et notamment sur un maximum de 10 % de l'épaisseur (d) de la couche de papier (1).

8. Couche de papier selon la revendication 7, **caractérisée en ce qu'**en plus du matériau papier, des solides sont incorporés dans la zone supérieure de la couche de papier (3), notamment des pigments et/ou des liants, qui ont été introduits dans la couche de papier (1) après la fabrication du papier.

9. Couche de papier selon la revendication 7 ou 8, **caractérisée en ce que** le côté d'impression (2) de la couche de papier (1) est formé à partir du côté supérieur de la zone supérieure de la couche de papier (3), sans qu'une couche réceptrice d'encre distincte, telle qu'un revêtement de pigments, ne soit prévue, ou **en ce que** le côté d'impression (2) de la couche de papier (1) est formé à partir du côté supérieur d'une couche réceptrice d'encre distincte.

10. Couche de papier selon l'une quelconque des revendications 7 à 9, **caractérisée en ce qu'**une masse réceptrice d'encre de la couche réceptrice d'encre est prévue au moins dans la partie supérieure de la structure fibreuse de la couche de papier, ladite masse enrobant au moins essentiellement les fibres de la structure fibreuse dans la zone supérieure de la structure fibreuse, et **en ce que** des espaces intermédiaires ouverts de la structure fibreuse enrobée demeurent sur le côté supérieur de la couche de papier.

11. Couche de papier selon l'une quelconque des revendications 7 à 10, **caractérisée en ce qu'**une masse réceptrice d'encre de la couche réceptrice d'encre est prévue au moins dans la partie supérieure de la structure fibreuse et **en ce que** la masse réceptrice d'encre comporte des particules d'un diamètre moyen < 1 000 nm.

12. Couche de papier selon l'une quelconque des revendications 7 à 11, **caractérisée en ce qu'**une pluralité d'espaces intermédiaires ouverts d'une longueur > 20 µm, de préférence > 30 µm et notamment > 40 µm, et/ou d'une surface d'ouverture > 200 µm², de préférence > 500 µm² et notamment > 750 µm², sont prévus sur le côté supérieur de la couche de papier.

13. couche de papier selon l'une quelconque des revendications 7 à 12, **caractérisée en ce qu'**au moins un espace intermédiaire, de préférence plus de trois et notamment plus de dix espaces intermédiaires sont prévus en moyenne par unité de surface [mm²] sur le côté supérieur.

14. Couche de papier selon l'une quelconque des revendications 7 à 13, **caractérisée en ce que** le grammage de la couche de papier (1) sans proportion de résine est compris entre 30 g/m² et 300 g/m², de préférence entre 50 g/m² et 120 g/m².

15. Élément plat imprimé ou à imprimer (6), notamment pour des applications sur des sols, des murs, des plafonds et/ou des meubles, comportant une couche de papier (1) selon l'une quelconque des revendications précédentes et notamment fabriqué par un procédé selon l'une quelconque des revendications précédentes.
